Europäisches Patentamt

European Patent Office

Office européen des brevets

(19)

(11) Veröffentlichungsnummer : **0 032 554**
**B1**

(12) **EUROPÄISCHE PATENTSCHRIFT**

(45) Veröffentlichungstag der Patentschrift :
09.03.83

(21) Anmeldenummer : 80107693.6

(22) Anmeldetag : 06.12.80

(51) Int. Cl.³ : **C 09 D 3/81, C 08 L 33/00,
C 08 L 63/00, C 08 L 67/00,
C 09 D 3/64, C 09 D 3/58**

(54) Bindemittelkombinationen für korrosionsfeste Lacke.

(30) Priorität : 24.12.79 AT 8125/79
08.10.80 AT 4992/80

(43) Veröffentlichungstag der Anmeldung :
29.07.81 Patentblatt 81/30

(45) Bekanntmachung des Hinweises auf die Patenterteilung : 09.03.83 Patentblatt 83/10

(84) Benannte Vertragsstaaten :
DE FR GB IT

(56) Entgegenhaltungen :
GB A 2 034 319

(73) Patentinhaber : VIANOVA KUNSTHARZ AKTIENGE-
SELLSCHAFT
Postfach 191 Leechgasse 21
A-8011 Graz (AT)

(72) Erfinder : Dworak, Gert, Dr.
Dr. Robert Grafstrasse 25
A-8010 Graz (AT)
Erfinder : Staritzbichler, Werner, Dr.
St. Veiterstrasse 28 f
A-8046 Graz (AT)
Erfinder : Thausz, Robert
Kasernstrasse 77
A-8041 Graz (AT)

(74) Vertreter : Pitter, Robert, Dr. et al
Leechgasse 21
A-8010 Graz (AT)

EP 0 032 554 B1

# 0 032 554

## Bindemittelkombinationen für korrosionsfeste Lacke

Die vorliegende Erfindung betrifft Eindemittelkombinationen von wasserverdünnbaren Polyester- oder Polymerisatharzen mit Phosphor- und/oder Phosphonsäureestern von Epoxidharzen für den Einsatz in ofentrocknenden wasserverdünnbaren Lacken für korrosionsbeständige Lackierungen.

Es ist bekannt, daß die Qualität von Lacken und insbesonders von wasserverdünnbaren Lacken bezüglich Korrosionsbeständigkeit sehr wesentlich von der Güte und Gleichnäßigkeit der Metallvorbehandlung abhängig ist. Im wesentlichen handelt es sich bei den in der Industrie eingesetzten Vorbehandlungsverfahren um das Aufbringen einer Zink- oder Eisenphosphatschicht auf das gereinigte Stahlblech, was üblicherweise im Spritz- oder Tauchverfahren erfolgt. Es ist klar, daß sich Schwankungen in der Schichtstärke der Phosphatschicht, ihr Kristallcharakter, die vorhergehende Blechreinigung, sowie spätere Beschädigungen der Phosphatschicht wesentlich auf die Schutzeigenschaften des Lackes auswirken. Es kann angenommen werden, daß dafür neben korrosionchemischen Prozessen in großem Maße auch die Haftfestigkeit der Lackschicht verantwertlich ist.

Gemäß der DE-A 22 04 844 wird versucht hydroxylgruppenhaltige Harze, welche in organischen Lacklösungsmitteln gelöst sind, mit Phosphorsäure bzw. Phosphorpentoxid, umzusetzen um die Korrosionsfestigkeit der Filme zu verbessern.

Auch aus der DE-A 27 57 733 sind Phosphorsäureester von Epoxidharzen bekannt, welche nach Neutralisation mit Basen als Bindemittel für wasserlösliche Lacke verwendet werden.

Gemäß der AT-A-7763/78, am 15.10.79 bekanntgemacht, entsprechend AT-B-356 905 können diese Bindemittel durch Verwendung von Hydroxyloder Vinylgruppen tragenden Phosphonsäurennoch wesentlich verbessert werden. Vor allem sind bei diesem Bindemitteltyp die Beständigkeitseigenschaften im unteren Einbrenntemperaturbereich den Phosphorsäureestern überlegen.

Als Alleinbindemittel sind die im Stand der Technik genannten Harze jedoch nicht in allen Fällen verwendbar, da zur Erzielung optimal applizierbarer Lacke infolge der relativ schmalen Rohstoffbasis nur wenige Variationsmöglichkeiten gegeben sind. Dies ist sicher auch der Grund für die Tatsache, daß derartige Produkte auf dem Markt nicht zu finden sind.

Es wurde nun gefunden, daß ofentrocknende Lacke auf der Basis von wasserverdünnbaren Polyester- oder Polymerisatharzen durch Zusätze von nach Neutralisation wasserlöslichen Phosphor- und/oder Phosphonsäureestern von Epoxidharzen in ihrer Korrosionsfestigkeit insbesonders auf schlecht oder nichtvorbehandeltem Stahlblech verbessert werden können, wobei die günstigen applikatorischen Eigenschaften weitgehend erhalten bleiben.

Die Erfindung betrifft dementsprechend Amino- oder Phenolharze als Vernetzungsmittel enthaltende Bindemittelkombinationen für wasserverdünnbare Einbrennlacke bestehend aus

(A) 40-98 Gew.-% eines Lackbindemittels auf Basis eines nach Neutralisation mit Basen wasserlöslichen Polyesterharzes oder Acrylcopolymerisates oder einer wäßrigen Acrylcopolymerdispersion oder einer Alkydharzemulsion und

(B) 2-60 Gew.-% eines wasserlöslichen mit der Komponente (A) verträglichen und gegebenenfalls mit Carbonsäure modifizierten epoxidgruppenfreien Esters eines Epoxidharzes mit ortho-Phosphorsäure und/oder einer Hydroxylgruppen und/oder Vinylgruppen tragenden Phosphonsäure mit einer Säurezahl von 12 bis 300 mg KOH/g, vorzugsweise 40-150 mg KOH/g.

Die bevorzugten Mengenbereiche für die beiden Komponenten liegen innerhalb einer Kombination von 70-95 Gew.-% Lackbindemittel (A) und 5-30 Gew.-% Epoxidharzester (B), wobei in diesen Fällen vorzugsweise die genannten Phosphonsäuren oder Mischungen von Phosphonsäuren mit ortho-Phosphorsäure neben den modifizierenden Carbonsäuren zur Veresterung herangezogen werden.

Es ist dem Fachmann bekannt, daß bei Mischungen von Kunstharzen, soferne es sich nicht um Vernetzungsmittel handelt, der Einfluß einer Komponente in den meisten Fällen erst sichtbar wird, wenn der Anteil an dieser Komponente mindestens 20-30 Gew.-% beträgt. Es war daher überraschend, daß im Falle der vorliegenden Erfindung bereits mit Zusätzen von 5 Gew.-% wesentliche Verbesserungen oder bereits optimale Ergebnisse bezüglich der Korrosionsfestigkeit auf nicht phosphatiertem Stahlblech erhalten werden.

Die Kombination der neutralisierten oder nichtneutralisierten Komponenten erfolgt durch Mischung der Harze oder deren Lösungen bei Temperaturen zwischen 20 und 100 °C. Die Mischung der Komponenten kann auch im Zuge der Herstellung des pigmentierten Lackes erfolgen. So können z. B. die Pigmente und Füllstoffe in der Komponente (A) oder einem Teil dieser Komponente vernahlen werden, während die Zugabe der Komponente (B), gegebenenfalls mit dem Rest der Komponente (A) beim Auflacken erfolgt.

Eine weitere Möglichkeit der Kombination der beiden Komponenten besteht in einer partiellen Cokondensation bei erhöhter Temperatur. Selbstverständlich ist diese Ausführungsform nicht verwendbar, wenn es sich bei der Komponente (A) um eine Dispersion oder eine Emulsion handelt. Bei Lackbindemitteln, welche unter Salzbildung mit Basen wasserlöslich gemacht werden können, wird durch diese Maßnahme nicht nur der Verträglichkeitsbereich vieler Harzkomponenten wesentlich erweitert, sondern überraschenderweise auch die Reaktivität der Bindemittel gegenüber Vernetzungskomponenten wie Amino- oder Phenolharze gesteigert. Dadurch können die Einbrenntemperaturen bei

2

0 032 554

den aus den erfindungsgemäßen Bindemitteln formulierten Lacken gegenüber den Mischungen um ca. 20° abgesenkt werden, ohne daß die Wasser- bzw. Salzsprühfestigkeit oder die Überlackierbarkeit nachteilig beeinflußt werden. Die Cokondensation erfolgt bei Temperaturen zwischen 120 und 180 °C und wird durch Prüfung der Verträglichkeit bzw. der Viskosität verfolgt.

Als Komponente (A) können die handelsüblichen wasserlöslichen Polyesterharze oder Acrylcopolymerisate herangezogen werden. Unter der Bezeichnung Polyesterharze werden in dieser Anmeldung sowohl ölfreie Polyester als auch ölmodifizierte Polyester (Alkydharze) verstanden. Die Wasserlöslichkeit dieser Produkte wird im allgemeinen durch Salzbildung an freien Carboxylgruppen mit Ammoniak oder Aminen erreicht. Die aus diesen Harzen formulierten Einbrennlacke werden üblicherweise unter Verwendung von Vernetzungsmitteln, wie Aminoharze oder Phenol-Formaldehyd-Harze verarbeitet. ,

Bei der Kombination durch Mischung können als Komponente (A) auch die sogenannten Einbrenndispersionen herangezogen werden. Bei diesen Bindemitteln handelt es sich um feinteilige Emulsionspolymerisate, welche vorzugsweise Acrylcopolymerisate darstellen, und die ebenfalls durch Aminoharze bei erhöhter Temperatur vernetzt werden. Eine weitere Möglichkeit besteht im Einsatz geeigneter Alkydharzemulsionen, als Komponente (A).

Als Komponente (B) werden Epoxidharzester eingesetzt, welche durch mindestens partielle Umsetzung der Epoxidgruppen mit ortho-Phosphorsäure oder Hydroxyl- und/oder Vinylgruppen enthaltenden Phosphonsäuren oder Mischungen aus diesen Säuren erhalten werden. Soferne nichtäquivalente Mengen eingesetzt werden, müssen die verbleibenden Epoxidgruppen entweder durch Veresterung mit Carbonsäuren oder durch Eigenkondensation bzw. gegebenenfalls Verätherung mit dem Lösungsmittel unter Ringöffnung reagiert werden. Die Veresterung mit den Carbonsäuren kann auch vor der Umsetzung mit der Phosphor- bzw. Phosphonsäure erfolgen.

Als Epoxidharze werden vorzugsweise die Di- oder Polyglycidyläther von Phenolen oder Phenolnovolaken eingesetzt, jedoch können auch andere Diepoxidverbindungen, wie sie sich von Polyalkoholen oder Polycarbonsäuren ableiten verwendet werden.

Die Phosphonsäuren entsprechen der Formel $(HO)_2 — P(O) — R$, wobei R ein Rest $—CH_2OH$, $—CH_2—CH_2—OH$, $—CH = CH_2$, $—CH_2—CH = CH_2$ sein kann, z. B. Hydroxymethan-, Hydroxyäthan-, Vinyl- oder Allylphosphonsäure.

Für die erfindungsgemäßen Bindemittelkombinationen werden bevorzugt die genannten Phosphonsäuren oder Mischungen dieser Säuren mit Phosphorsäure herangezogen. Durch die Phosphonsäuren wird bei guter Haftung der Filme auf dem Substrat noch eine erhöhte Vernetzungsdichte im Film erreicht.

Die zur Modifizierung einsetzbaren Carbonsäuren sind ungesättigte oder gesättigte Mono- und/oder Dicarbonsäuren, wie Ölfettsäuren z. B. Leinölfettsäure, Tallölfettsäure, Rizinenfettsäuren aber auch Acrylsäure, Fumarsäure, Dimethylolpropionsäure, Benzoesäure oder dimerisierte Ölfettsäuren und Adipinsäure.

Die Menge an Phosphor- oder Phosphonsäuren soll in der Komponente (B) so gewählt werden, daß die Komponente eine Säurezahl von 12 bis 300, vorzugsweise 40 bis 150 mg KOH/g aufweist. Dies entspricht im allgemeinen einem Anteil von 0,11 bis 1,0 Mol der Säure pro Mol Oxirangruppen.

Die Überführung der Bindemittelkombinationen oder der Einzelkomponenten in die wasserlösliche Form erfolgt durch partielle oder vollständige Salzbildung an den Säuregruppen durch Ammoniak oder Amine, vorzugsweise tertiäre oder sekundäre Alkyl- oder Alkanolamine.

Eine Voraussetzung für die Erzielung der durch die Erfindung angestrebten Eigenschaften ist die Verträglichkeit zwischen den Komponenten. Bei der Auswahl der für die erfindungsgemäßen Kombinationen geeigneten Komponenten sind dementsprechend Verträglichkeitsprüfungen durchzuführen, wobei ein auf Verarbeitungsviskosität eingestellter Prüflack auf eine Glasplatte aufgegossen und eingebrannt wird. Der so erhaltene Film muß sowohl in der Aufsicht als auch in der Durchsicht eine gleichmäßige Pigmentverteilung aufweisen. Die Herstellung der Prüflacke erfolgt durch Abmischen einer pigmentierten neutralisierten wäßrigen Lösung der Komponente (A) mit einem verdünnten Klarlack aus der Komponente (B). Gegebenenfalls kann die Prüfung mit verschiedenen Mengen an Komponente (B) erfolgen. Die Verträglichkeit der Zusatzharze mit dem Stammharz kann durch Variation des Molekulargewichtes, der Polarität oder der Fettsäuremodifizierung gesteuert werden.

Eine wesentliche Erweiterung des Verträglichkeitsbereiches ist, wie bereits gesagt, durch eine partielle Cokondensation der Komponenten (A) und (B) zu erzielen, soferne es sich bei der Komponente (A) nicht um eine Dispersion oder Emulsion handelt. Selbstverständlich darf bei dieser Wärmebehandlung der lösliche Zustand der Bindemittelkombination nicht überschritten werden. Der Eintritt der Verträglichkeit kann im Falle der Cokondensation durch das Verschwinden der starken Trübung eines erkalteten Tropfender Bindemittelkombination erkannt werden. Eine leichte Trübung ist in fast allen Fällen tolerierbar.

Die Lacke gemäß der vorliegenden Erfindung enthalten im allgemeinen als weiteren Bestandteil Vernetzungskomponenten, wie sie bei Formulierungen von Einbrennlacken üblich sind. Zu dieser Gruppe zählen die partiell oder vollständig verätherten Aminoharze oder Phenolharze. Ihr Aufbau und ihre Anwendung sind dem Fachmann bekannt.

Auch die übrigen Bestandteile der Lacke, wie Pigmente, Füllstoffe, Hilfslösungsmittel, Additive zur Verbesserung der Oberflächeneigenschaften u. a. sind dem Fachmann geläufig.

3

## 0 032 554

Die folgenden Beispiele erläutern die Erfindung, ohne ihren Umfang zu beschränken. Alle Prozentangaben sind, wenn nicht anders angegeben, Gewichtsprozente.

### Beispiel 1

a) Herstellung der Komponente (B)

190 g eines Diepoxidharzes auf Bisphenol-A-Basis (Epoxidäquivalentgewicht 182-194) werden bei 160 °C mit 84 g (0,3 Mol) Leinölfettsäure bis zu einer Säurezahl unter 3 mg KOH/g verestert und mit 29,5 g Diacetonalkohol auf 90 % verdünnt.

Zu einer Lösung aus 60 g einer 75 %igen wäßrigen Lösung von ortho-Phosphorsäure (0,46 Mol) und 130 g Diacetonalkohol wird bei 50 °C eine Mischung aus 304 g des oben hergestellten Epoxidesters und 267,2 g einer Lösung von 213,75 g eines Diepoxidharzes auf Bisphenol-A-Basis (0,45 Mol Oxirangruppen ; Schmelzpunkt nach DURRAN 64-74 °C ; Hydroxylwert = 0,32 Mol OH/100 g) in Diacetonalkohol portionsweise zugegeben und bis zu einem Oxirangehalt von Null reagiert. Das Produkt hat eine Säurezahl von 92,3 mg KOH/g und ist nach Neutralisation mit Triäthylamin in Wasser fast klar löslich.

b) Kombination der Komponenten und Herstellung der Prüflacke (Graue Tauchgrundierung)

Aus 114 g eines 70 %igen handelsüblichen nach Neutralisation mit Triäthylamin wasserlöslichen Alkydharzes (Säurezahl 58 mg KOH/g, ca. 30 % Ölfettsäuren), 32,3 g eines 62 %igen handelsüblichen hochreaktiven wasserlöslichen Melaminharzes, dessen Methylolgruppen zu etwa 60 % mit Methanol veräthert sind, 55 g Titandioxid (Rutiltyp), 75 g Lithopone 30 %ig, 18 g Bleisilicochromat, 2 g Farbruß, sowie aus ca. 31 g Äthylenglykolmonobutyläther, 15 g Diäthylenglykolmonobutyläther, 7,5 g i-Butanol, ca. 10 Triäthylamin und ca. 175 g deionisiertem Wasser wird in der üblichen Art und Weise ein grauer Tauchlack hergestellt, welcher einen pH-Wert von über 8 und eine Auslaufzeit von ca. 25 s nach DIN 53 211/20 °C aufweist (Lack 1 a = Vergleichslack).

In gleicher Weise wird ein Lack aus 91 g des obengenannten Alkydharzes, 32,3 g des 62 %igen handelsüblichen, hochreaktiven Melaminharzes, 22 g des gemäß (1a) hergestellten Harzes hergestellt. Dieser Lack weist einen pH-Wert von über 8 und eine Auslaufzeit von ca. 25 s nach DIN 53 211/20 °C auf (Lack 1b).

c) Prüfung der Lacke auf Korrosionsbeständigkeit

Die Lacke (1a) und (1b) werden auf gereinigtes Stahlblech aufgegossen und ca. 5 Minuten in vertikaler Stellung bei Raumtemperatur abgelüftet und anschließend 20 Minuten bei der in der Tabelle 1 angegebenen Temperatur gehärtet. Nach dieser Auftragsmethode weist der Überzug von oben nach unten zunehmende Schichtstärken (ca. 12 bis 30 µm) auf. Der Lackfilm wird durch einen von oben nach unten verlaufenden, bis auf das Metall durchgehenden Schnitt verletzt und im Salzsprühtest gemäß ASTM B 117-64 geprüft.

### Tabelle 1

| Einbrenn-bedingungen min/°C | Lack No. | Nicht vorbehandeltes Stahlblech | | Zinkphosphatiertes Stahlblech (Bonder [R]130) | | | |
|---|---|---|---|---|---|---|---|
| | | 72[1] | 144[1] | 144[1] | 312[1] | 144[2] | 312[2] |
| 30/100 | 1 a | 20-10 | 25-15 | 4-3 | 6 | 2 | 2-3 |
| | 1 b | 5-4 | 7-6 | 3 | 6 | 1 | 2 |
| 20/120 | 1 a | 20-10 | 30-15 | 4 | 8 | 1-2 | 3 |
| | 1 b | 3 | 6-5 | 2 | 6 | 1 | 2 |
| 20/140 | 1 a | 30-10 | 30-20 | 3 | 10 | 1-2 | 4 |
| | 1 b | 3-2 | 5 | 3 | 5 | 1 | 2 |

1) Prüfdauer in Stunden ; die in den darunter liegenden Spalten angegebenen Zahlen geben die Ablösung des Lackfilms am Schnitt in mm an (Abreißtest). Die kleinere Zahl bezieht sich dabei immer auf die höhere Schichtstärke.
2) Beurteilung der unverletzten Lackfläche nach der angegebenen Prüfdauer (Stunden).
Beurteilung : 1 = kein Angriff, 5 = starke Blasenbildung, beim Abkratzen Lack an diesen Stellen entfernbar.

### Beispiel 2

a) Herstellung der Komponente (B)

12,8 g (0,115 Mol) Hydroxymethanphosphonsäure, 4,5 g deionisiertes Wasser und 64,7 g Methyläthylketon werden auf 70 °C erwärmt. Unter Rühren setzt man eine Lösung aus 256 g Methyläthylketon und 475 g (1 Mol Oxirangruppen) eines Diepoxidharzes auf Bisphenol-A-Basis (Schmelzpunkt nach DURRAN 64-74 °C, Hydroxylwert 0,32 Mol OH/100g) portionsweise zu. Die Temperatur wird gehalten, bis der Oxirangehalt auf Null gesunken ist. Das Reaktionsprodukt hat eine Säurezahl von 14 mg KOH/g und ergibt nach Neutralisation mit Triäthylamin in Wasser eine leicht opake Lösung.

b) Kombination der Komponenten und Herstellung der Prüflacke (Hellgrauer Einschichtlack für Spritz- und Tauchapplikation)

Aus 114 g eines 75 %igen hanaelsüblichen nach Neutralisation wasserlöslichen nichttrocknenden Alkydharzes (Säurezahl 60 mg KOH/g, 30 % pflanzliche Fettsäuren), 24 g des auch in Beispiel 1b) eingesetzten Melaminharzes, 70 g TiO$_2$ (Rutil), 65 g Bariumsulfat, 0,1 g Farbruß sowie ca 5 g Äthylenglykolmonoäthyläther, 7,3 g Dimethyläthanolamin und ca. 170 g deionisiertem Wasser wird in üblicher Weise ein Lack hergestellt. Der pH-Wert liegt bei ca. 8, die Auslaufzeit (DIN 53 211/20 °C) ca 35 Sekunden (Lack 2a = Vergleichslack).

In gleicher Weise wird ein Lack, welcher als Bindemittel 97 g des obengenannten Alkydharzes, 24 g des Melaminharzes und 18,5 g der gemäß Beispiel 2a hergestellten Komponente (B) enthält, hergestellt. Der Lack hat einen pH-Wert von 7,6 und eine Auslaufzeit von 35 Sekunden (Lack 2b).

c) Prüfung der Lacke

Die Lacke 2a und 2b wurden wie bei Beispiel 1 auf gereinigtes Stahlblech mit einer Naßfilmstärke von 200 μm aufgezogen und nach 10 Minuten Ablüftzeit bei 120 °C 20 Minuten eingebrannt. Der Film hatte eine Trockenfilmstärke von ca. 30 μm. Die Ablösung nach dem Salzsprühtest betrug

```
beim Lack 2a nach 96 Stunden 10 mm
             nach 168 Stunden über 25 mm
beim Lack 2b nach 96 Stunden 2 mm
             nach 168 Stunden 7 mm
Beim Tropentest gemäß DIN 50 017 betrug der Blasengrad
beim Lack 2a nach 120 Stunden m4 g2 (DIN 53 209)
             nach 240 Stunden m5 g2
beim Lack 2b nach 120 Stunden m0 g0
             nach 240 Stunden m0 g0
```

## Beispiel 3

a) Herstellung der Komponente (B)

15,0 g (0,115 Mol) einer 75 %igen Lösung von ortho-Phosphorsäure, 12,8 g (0,115 Mol) Hydroxymethanphosphonsäure, 4,5 g deionisiertes Wasser, 60,7 g Methyläthylketon und 26,8 g Isopropanol werden auf 50 °C erwärmt und einer Lösung aus 47 g Methyläthylketon und 190 g eines flüssigen Diepoxidharzes auf Bisphenol-A-Basis (Epoxidäquivalentgewicht 182-194) portionsweise zugesetzt und bis zu einem Oxirangehalt von Null reagiert. Die Säurezahl beträgt 81 mg KOH/g.

b) Kombination der Komponenten und Herstellung des Prüflackes (Weißer Einschichtlack für Tauchapplikation)

Aus 121 g eines handelsüblichen wasserlöslichen Acrylcopolymerisatharzes (70 %, Säurezahl 75 mg KOH/g), 15 g Hexamethoxymethylmelamin, 100 g TiO$_2$ (Rutil), 100 g Lithopone 30 %ig, 12 g Triäthylamin, 62 g Äthylenglykolmonobutyläther und ca. 300 g deionisiertem Wasser wird in üblicher Weise ein Lack hergestellt. Der Lack zeigt einen pH-Wert von 8,7 und eine Auslaufzeit von 25 Sekunden (Lack 3a = Vergleichslack).

In gleicher Weise wird aus 97 g des oben verwendeten Acrylharzes, 15 g HMMM, 23 g Komponente (B) aus Beispiel 3a ein Lack hergestellt, welcher einen pH-Wert von 8,7 und eine Auslaufzeit von 25 Sekunden aufweist (Lack 3b).

c) Prüfung der Lacke

Die Lacke wurden auf gereinigtes Stahlblech und zinkphosphatiertes Stahlblech aufgetragen und 20 Minuten bei 160 °C eingebrannt (Trockenfilm 30 μm). Im Salzsprühtest ergaben sich folgende Ergebnisse :

```
Lack 3a : Stahlblech,   nach 120 Stunden : fast völlige Ablösung
          Bonder 130 : nach 120 Stunden : 2 mm
                       nach 216 Stunden : fast völlige Ablösung
Lack 3b : Stahlblech,   nach 120 Stunden : 5 mm
          Bonder 130 : nach 120 Stunden : 1-2 mm
                       nach 216 Stunden : 3 mm
```

## Beispiel 4

### a) Herstellung der Komponente (B)

190 g eines Diepoxidharzes auf Bisphenol-A-Basis (Epoxidäquivalent 182-194) werden bei 150 °C mit 57 g (0,1 Mol) einer « Dimerfettsäure » (Dimere Fettsäure 75 %, trimere Fettsäure 22 %, Monocarbonsäure 3 % ; Säurezahl 186-194 mg KOH/g) bis zu einer Säurezahl von weniger als 3 mg KOH/g verestert und mit einem Lösungsmittelgemisch aus 75 % Methyläthylketon und 25 % Isopropanol auf 80 % Festkörpergehalt verdünnt.

Zu einer Lösung aus 23,5 g (0,18 Mol) ortho-Phosphorsäure (75 %ig in $H_2O$) und 34,9 g Isopropanol wird bei 50 °C eine Mischung aus 309 g des oben hergestellten Epoxidharzesters und 155,4 g einer Lösung von 49,4 g (0,14 Mol Oxirangruppen) eines Diepoxidharzes auf Bisphenol-A-Basis (Schmelzpunkt nach DURRAN 64-74 °C, Hydroxylwert 0,32 Mol OH/100 g) in 106 g Methyläthylketon portionsweise zugegeben und bis zu einem Oxirangehalt von 0 reagiert. Das Produkt hat eine Säurezahl von 40 mg KOH/g.

### b) Cokondensation mit wasserlöslichem Alkydharz

93 g eines handelsüblichen, nach Neutralisation mit Triäthylamin wasserlöslichen Alkydharzes, 70 %ig in Isopropanol/Äthylenglykolmonoäthyläther (Säurezahl ca. 60 mg KOH/g, ca. 25 % Ölfettsäuren) werden bei 80 °C mit 54,3 g der in Stufe a) hergestellten 64 %igen Harzlösung gemischt und unter Abdestillieren des Lösungsmittelgemisches auf 150 °C erwärmt. Man hält die Temperatur bis die Auslaufzeit einer 50 %igen Lösung in Äthylenglykolmonobutyläther nach DIN 53 211/20 °C 190-220 s beträgt und eine auf einer Glasplatte erkaltete Harzprobe keine Trübung mehr aufweist. Das Reaktionsprodukt wird mit einem Lösungsmittelgemisch aus 70 % Äthylenglykolmonobutyläther und 30 % Äthylenglykolmonoäthyläther auf 70 % Festkörpergehalt verdünnt. Das Harz hat eine Säurezahl von 43 mg KOH/g und ist nach Neutralisation mit Triäthylamin in Wasser fast klar löslich.

### c) Herstellung einer schwarzen Tauchgrundierung

Aus 369 g Harzlösung (4 b), 70 %ig  
    75,2 g wasserlöslichem MF-Harz, 62 %ig (hochreaktiv, 60 % Methanol veräthert)  
    16,5 g Farbruß  
    22,5 g Bleichromat  
   261 g Lithopone, 30 %  
    54,7 g Diäthylenglykolmonobutyläther  
    90,1 g Äthylenglykolmonobutyläther  
    24,9 g Isobutanol  
    24,9 g Triäthylamin und  
ca. 560 g deionisiertem Wasser

wird in üblicher Weise ein schwarzer Lack hergestellt, welcher einen pH-Wert von über 8 und eine Auslaufzeit nach DIN 53 211/20 °C von ca. 25 s aufweist.

Ein Vergleichslack wird in der Weise formuliert, daß als Harzlösung das in b) eingesetzte Alkydharz verwendet wird.

### d) Prüfung der Lacke

Die Prüfung der Lacke erfolgt in der im Beispiel 1 unter c) angegebenen Weise. Außerdem wird die Pendelhärte nach KÖNIG bei einer Trockenfilmstärke von 20-25 µm geprüft.

### Tabelle 2

| Einbrennbed. min/°C | Lack | Salzsprühtest | | Pendelhärte nach König (s) |
| --- | --- | --- | --- | --- |
| | | 144 Stden | 288 Stden | |
| 30/100 | Beisp. 1 | 2 | 3 | 125 |
| | Vergleich | 10-12 | 100 % Ablösung | 100 |
| 20/120 | Beisp. 1 | 2 | 2-3 | 125 |
| | Vergleich | 3-4 | 5-8 | 115 |

Beispiel 5

a) Herstellung der Komponente (B)

Zu einer Lösung aus 39,2 g (0,3 Mol) ortho-Phosphorsäure (75 %ig in $H_2O$), 25,3 g Methyläthylketon und 8,4 g Isopropanol werden bei 50 °C 190 g eines Diepoxidharzes auf Bisphenol-A-Basis (Epoxidäquivalent 182-194) gelöst und 76,5 g Methyläthylketon und 25,4 g Isopropanol portionsweise zugegeben und bis zu einem Oxirangehalt von 0 reagiert. Das Produkt hat eine Säurezahl von 118 mg KOH/g.

b) Cokondensation mit wasserlöslichem Alkydharz

121,4 g des in Beispiel 4 b eingesetzten wasserlöslichen Alkydharzes werden bei 80 °C mit 22,7 g der in Stufe a) hergestellten Harzlösung gemischt und in gleicher Weise wie in Beispiel 4 reagiert. Das Produkt wird mit Äthylenglykolmonobutyläther auf 75 % und weiter mit Äthylenglykolmonoäthyläther auf 70 % verdünnt. Die Säurezahl beträgt 54 mg KOH/g.

c) Herstellung von gelben Einschichtlacken für Spritzapplikation

Aus (A) 98,9 g des in (5 b) verwendeten handelsüblichen Alkydharzes bzw. aus einer Mischung
(B) 84 g des genannten Alkydharzes und
18 g der gemäß (5 a) erhaltenen Komponente bzw. aus einer Mischung
(C) 68,9 g des oben genannten Alkydharzes und
36 g der gemäß (5 b) erhaltenen Komponente und jeweils
20 g handelsüblichem MF-Harz vom Hexamethoxymethylmelamintyp
79 g Titandioxid (Rutil)
10 g Mikrotalkum
0,5 g Eisenoxidgelb
298 g Isopropanol
5,8 g Äthylenglykolmonobutyläther
6,6 g Dimethyläthanolamin und
ca. 200 g deionosiertes Wasser

werden in üblicher Weise drei Lacke hergestellt, deren pH-Wert über 8 und deren Auslaufzeit nach DIN 53 211/20 °C bei ca. 20 s liegt. In den Lacken (B) und (C) ist nach dieser Formulierung jeweils die gleiche Menge an Epoxidharzester enthalten.

d) Prüfung der Lacke

Die Lacke werden auf entfettetes Stahlblech durch Spritzen in einer Schichtstärke aufgebracht, welche einen Trockenfilm von 30 μm ergibt. Die Prüfergebnisse sind in Tabelle 3 zusammengefaßt.

Tabelle 3

| Lacke | A | | B | | C | |
|---|---|---|---|---|---|---|
| Einbrennbed. min/°C | 20/140 | 20/160 | 20/140 | 20/160 | 20/140 | 20/160 |
| Pendelhärte nach König (s) | 25 | 70 | 50 | 100 | 71 | 125 |
| Tiefung nach ERICHSEN (mm) | 9 | 8 | 8 | 5 | 7 | 5 |
| Acetontest[1] | 3 | 3 | 2-3 | 1 | 2 | 1 |
| Salzsprühtest ASTM B 117-64 bei 15 μm Schichtstärke nach 72 Stden (mm) | 7 | 11 | 4 | 4 | 3 | 4 |
| Tropentest DIN 50 017 30 μm Schichtstärke nach 120 Stden | m3g5 | m1g2 | m2g2 | m0g0 | m0g0 | m0g0 |

[1] Einwirkungszeit : 1 min, Beurteilung der Quellung und Verletzbarkeit : 1 = sehr gut, 5 = sehr schlecht.

Beispiel 6

a) Herstellung der Komponente (B)

Zu einer Lösung aus 26,1 g einer 75 %igen wäßrigen Lösung von ortho-Phosphorsäure in 22,8 g Methyläthylketon und 7,6 g Isopropanol werden 190 g des auch in Beispiel (4a) eingesetzten Diepoxidharzes, gelöst in 76,5 g Methyläthylketon und 25,5 g Isopropanol portionsweise zugegeben und bis zu einem Oxirangehalt von 0 reagiert. Endsäurezahl : 55 mg KOH/g.

b) Cokondensation mit wasserlöslichem Polyesterharz

100 g eines handelsüblichen nach Neutralisation mit Triäthylamin wasserlöslichen gesättigten Polyesterharzes (70 %ig in Isopropanol/Äthylenglykolmonoäthyläther, Säurezahl 60 mg KOH/g, Hydroxylzahl 55 mg KOH/g) werden bei 80 °C mit 45,2 g des in (a) hergestellten Epoxidharzesters gemischt und auf 150 °C erwärmt. Diese Temperatur wird gehalten bis die Auslaufzeit nach DIN 53 211/20 °C einer 50 %igen Lösung in Äthylenglykolmonobutyläther einen Wert zwischen 110 und 150 s erreicht hat. Der Ansatz wird auf einen Festkörpergehalt von 70 % verdünnt. Säurezahl : 48 mg KOH/g.

c) Herstellung eines grauen Einbrennfüllers

Aus 364 g Harzlösung (6 b), 70 %ig
   45 g handelsüblichem MF-Harz vom Hexamethoxymethylmelamintyp,
  150 g Titandioxid (Rutil)
  270 g Bariumsulfat (Blanc fixe N)
    1,5 g Farbruß
   20,3 g Dimethyläthanolamin
   15 g Äthylenglykolmonobutyläther und
   12 g Äthylenglykolmonoäthyläther
ca. 563 g deionisiertem Wasser

wird in üblicher Weise ein Lack hergestellt, welcher einen pH-Wert von ca. 8,4 und eine Auslaufzeit (DIN 53 211/20 °C) von 25 s aufweist.

In gleicher Weise wird ein Vergleichslack mit dem in (6 b) eingesetzten handelsüblichen Polyesterharz hergestellt.

d) Prüfung der Lacke

Die Lacke werden durch Spritzen auf verschieden vorbehandeltem Stahlblech aufgebracht. Die Trockenfilmstärke soll 30-35 μm betragen. Die Prüfergebnisse sind in Tabelle 4 zusammengefaßt.

Tabelle 4

| Lack | (6 c) | | Vergleich | |
|---|---|---|---|---|
| Einbrennbeding. min/°C | 20/140 | 20/160 | 20/140 | 20/160 |
| Pendelhärte nach KÖNIG (s)[1] | 122 | 132 | 110 | 130 |
| Tiefung nach ERICHSEN (mm)[1] | 6 | 4 | 8,4 | 6,5 |
| Acetontest (wie Beispiel 5)[1] | 2 | 1 | 3 | 2 |
| Salzsprühtest ASTM B 117-64 Stahlblech nach 192 Stunden | 10 | 11 | 18 | 20 |
| Eisenphosphatiertes Stahlblech, nach 240 Stunden | 3 | 4 | 10 | 9 |
| Zinkphosphatiertes Stahlblech, nach 240 Stunden | 3 | 3 | 11 | 10 |

1) Die Proben wurden auf entfettetem Stahlblech durchgeführt.

# 0 032 554

Beispiel 7

a) Herstellung der Komponente (B)

Zu einer Lösung aus 28 g Hydroxymethanphosphonsäure (0,25 Mol) in 7,3 g Wasser und 38 g Diacetonalkohol wird bei 70 °C eine Lösung von 190 g des in Beispiel (4a) eingesetzten Diepoxidharzes in 100 g Diacetonalkohol portionsweise zugegeben und bei 70 °C bis zu einem Oxirangehalt von 0 reagiert.

b) Cokondensation mit wasserlöslichem Alkydharz

100 g der in Beispiel 4 eingesetzten Alkydharzlösung (70 %ig) werden bei 80 °C mit 45,5 g der gemäß (7 a) hergestellten Komponente gemischt und unter Abdestillation der Lösungsmittel auf 160 °C erwärmt. Sobald eine Auslaufzeit (DIN 53 211/20 °C) einer 50 %igen Lösung des Materials in Äthylenglykolmonobutyläther von 310-350 s erreicht ist, wird der Ansatz mit diesem Lösungsmittel auf 70 % verdünnt. Das Harz weist eine Säurezahl von 43 mg KOH/g auf und ist nach Neutralisation mit Triäthylamin klar wasserlöslich.

c) Herstellung einer schwarzen Tauchgrundierung

Aus 123   g Harzlösung (7 b), 70 %ig
    24   g des in Beispiel (4 c) eingesetzten MF-Harzes
    5,3 g Farbruß
    7,2 g Bleichromat
    84   g Lithopone, 30 %
    17   g Diäthylenglykolmonobutyläther
    29   g Äthylenglykolmonobutyläther
    8   g Isobutanol
    6,3 g Triäthylamin
ca. 200   g deionisiertem Wasser

wird in üblicher Weise ein schwarzer Lack hergestellt, welcher einen pH-Wert von ca. 8 und eine Auslaufzeit nach DIN 53 211/20 °C von ca. 25 s aufweist. Als Vergleichslack dient der Vergleichslack aus Beispiel 4.

d) Prüfung der Lacke

Die Prüfung der Korrosionsfestigkeit wird auf eisenphosphatiertem Stahlblech durchgeführt. Die Bedingungen für die Herstellung der Prüfbleche entsprechen den, in Beispiel 4 angegebenen. Die Ergebnisse sind in Tabelle 5 zusammengefaßt.

Tabelle 5

| Einbrennbed. min/°C | Lack | Salzsprühtest | | Pendelhärte nach König (s) |
|---|---|---|---|---|
| | | 144 Std. | 288 Std. | |
| 20/100 | Beispiel 7 | 3-4 | 5-7 | 125 |
| | Vergleich | 13-18 | 100 % Ablösung | 95 |

**Ansprüche**

1. Bindemittelkombinationen für wasserverdünnbare Einbrennlacke bestehend aus Amino- oder Phenolharzen als Vernetzungsmittel und

(A) 40-98 Gew.-% eines Lackbindemittels auf Basis eines nach Neutralisation mit Basen wasserlöslichen Polyesterharzes oder Acrylcopolymerisats oder einer wäßrigen Acrylcopolymerdispersion oder Alkydharzemulsion und

(B) 2-60 Gew.-% eines wasserlöslichen mit der Komponente A verträglichen und gegebenenfalls mit Carbonsäure modifizierten epoxidgruppenfreien Esters eines Epoxidharzes mit ortho-Phosphorsäure und/oder einer Hydroxylgruppen und/oder Vinylgruppen tragenden Phosphonsäure, mit einer Säurezahl von 12 bis 300 mg KOH/g, vorzugsweise 40-150 mg KOH/g.

2. Bindemittelkombinationen nach Anspruch 1, bestehend aus 70 bis 95 Gew.-% der Komponente (A) und 5 bis 30 Gew.-% der Komponente (B).

9

3. Bindemittelkombinationen nach Anspruch 2, dadurch gekennzeichnet, daß die Komponente (B) Ester der Phosphonsäuren oder von Mischungen von Phosphonsäure mit ortho-Phosphorsäure sind.

4. Bindemittelkombinationen nach den Ansprüchen 1 bis 3, dadurch gekennzeichnet, daß die Komponente (B) ein Ester eines Epoxidharzes auf Basis Bisphenol A oder eines Phenol-Novolakes ist.

5. Bindemittelkombination nach den Ansprüchen 1 bis 4, dadurch gekennzeichnet, daß die Komponente (B) eine Säurezahl zwischen 12 300, vorzugsweise 40 bis 150 aufweist.

6. Bindemittelkombination nach den Ansprüchen 1 bis 5, dadurch gekennzeichnet, daß Komponente (A) auf Basis von nach Neutralisation mit Basen wasserlöslichen Polyesterharzen mit der Komponente (B) bei einer Temperatur zwischen 120 und 180 °C bis zum Erreichen der Verträglichkeit cokondensiert werden.

## Claims

1. Binder combinations for water dilutable stoving paints consisting of amine or phenolic resins as crosslinking agents and

(A) 40-98 % by weight of a paint binder on the basis of a polyester resin or an acrylic polymer water soluble upon neutralisation with bases or an aqueous acrylic copolymer dispersion or an alkyd resin emulsion and

(B) 2-60 % by weight of a water soluble, with component (A) compatible and optionally carboxylic acid modified epoxy group-free ester of an epoxy resin with ortho-phosphoric and/or a phosphonic acid carrying hydroxy groups and/or vinyl groups, with an acid value of from 12 to 300 mg KOH/g, preferably of from 40-150 mg KOH/g.

2. Binder combinations according to claim 1, consisting of 70 to 95 % by weight of component (A) and of 5 to 30 % by weight of component (B).

3. Binder combinations according to claim 2, characterised in that component (B) is an ester of phosphonic acids or of mixtures of phosphonic acids with ortho-phosphoric acid.

4. Binder combinations according to claims 1 to 3, characterised in that component (B) is an ester of an epoxy resin based on Bisphenol A or on a phenol novolak.

5. Binder combinations according to claims 1 to 4, characterised in that component (B) has an acid value of between 12 and 300, preferably between 40 and 150 mg KOH/g.

6. Binder combinations according to claims 1 to 5, characterised in that component (A) based on a polyester resin water soluble upon neutralisation with bases is condensed with component (B) at a temperature of between 120 and 180 °C, until compatibility is attained.

## Revendications

1. Compositions de liants pour peintures au four hydrosolubles caractérisées en ce qu'elles comprennent des résines aminées ou phénoliques comme agents de réticulation et

(A) 40-98 % en poids d'un liant pour peintures à base d'une résine polyester soluble dans l'eau après neutralisation par une base ou un copolymère acrylique ou une dispersion aqueuse d'un copolymère acrylique ou une émulsion de résine alkyde et

(B) 2-60 % en poids d'un ester sans groupements époxy soluble dans l'eau compatible avec le composant (A) et éventuellement modifié par un acide carboxylique, d'une résine époxy avec l'acide ortho-phosphorique et/ou acide phosphonique portant des groupements hydroxyle et/ou vinyle, ayant un indice d'acide de 12 à 300 mg KOH/g, de préférence de 40-150 mg KOH/g.

2. Compositions de liants selon la revendication 1, caractérisées en ce qu'elles contiennent 70 à 95 % en poids de composant (A) et 5 à 30 % en poids de composant (B).

3. Compositions de liants selon la revendication 2, caractérisées en ce que le composant (B) est un ester d'acides phosphoniques ou de mélanges d'acide phosphonique avec l'acide ortho-phosphorique.

4. Compositions de liants selon les revendications 1 à 3, caractérisées en ce que le composant (B) est un ester d'une résine époxy à base de bisphénol A ou d'une novolaque phénolique.

5. Compositions de liants selon les revendications 1 à 4, caractérisées en ce que le composant (B) a un indice d'acide compris entre 12 et 300, de préférence de 40 à 150.

6. Compositions de liants selon les revendications 1 à 5, caractérisées en ce que les composants (A) à base d'une résine polyester hydrosoluble après neutralisation par des bases sont cocondensés entre 120 et 180 °C jusqu'à ce que la compatibilité soit atteinte avec le composant (B).